# EUROPÄISCHE PATENTSCHRIFT

(11) **EP 0 879 548 B1**
(45) Veröffentlichungstag und Bekanntmachung des Hinweises auf die Patenterteilung: **28.04.1999**
(21) Anmeldenummer: 97902331.4
(22) Anmeldetag: 05.02.1997
(51) Int. Cl.: H05B 7/06, H05B 7/12

(54) **ELEKTRODE UND KÜHLELEMENT FÜR EIN METALLURGISCHES GEFÄSS**
ELECTRODE AND COOLING ELEMENT FOR A METALLURGICAL VESSEL
ELECTRODE ET ELEMENT DE REFROIDISSEMENT POUR CUVE METALLURGIQUE

(30) Priorität: 08.02.1996 DE 29602191 U
(43) Veröffentlichungstag der Anmeldung: 25.11.1998
(73) Patentinhaber: Köster, Volkwin, 77694 Kehl-Bodersweier (DE)
(72) Erfinder: Köster, Volkwin, 77694 Kehl-Bodersweier (DE)
(74) Vertreter: Glawe, Delfs, Moll & Partner
(86) Internationale Anmeldenummer: EP9700514
(87) Internationale Veröffentlichungsnummer: WO9729617

(56) Entgegenhaltungen:
- EP-A- 0 133 652
- DE-A- 2 637 632
- US-A- 4 947 405
- PATENT ABSTRACTS OF JAPAN vol. 016, no. 311 (M-1277), 8.Juli 1992 & JP 04 086480 A (KAWASAKI STEEL CORP), 19.März 1992,
- PATENT ABSTRACTS OF JAPAN vol. 016, no. 107 (M-1222), 17.März 1992 & JP 03 279779 A (DAIDO STEEL CO LTD), 10.Dezember 1991,

## Beschreibung

Die Erfindung betrifft eine Elektrode für ein metallurgisches Gefäß sowie ein Kühlelement für eine Wand eines metallurgischen Gefäßes, die bzw. das einen Hohlraum und eine Einrichtung zum Kühlen durch Versprühen eines Kühlmediums (Flüssigkeit oder Flüssigkeit/Gasgemisch) in diesem Hohlraum aufweist.

Gegenstand der Erfindung ist ferner ein Gleichstrom-Lichtbogenofen, der wenigstens eine erfindungsgemäße Elektrode aufweist.

Bei metallurgischen Gefäßen zur Elektrostahlherstellung, bspw. Gleichstrom-Lichtbogenöfen, dienen im Feuerfestfutter des Gefäßes eingelassene und dieses Futter durchdringende Elektroden (Bodenelektroden) als Anoden zur Herstellung der elektrischen Verbindung mit der Schmelze. Die mit der Metallschmelze in Berührung stehenden Elektrodenteile unterliegen einem hohen thermischen Verschleiß. Es sind daher bereits verschiedene Kühleinrichtungen für Bodenelektroden vorgeschlagen worden.

DE-A-38 35 785, JP-A-03 279 779, JP-A-04 086 480 und US-A-4,947,405 schlagen Kühleinrichtungen vor, die den aus der Gefäßwandung nach außen ragenden Elektrodenteil umgeben und kühlen. Die Kühlleistung ist gering, da nur ein kleiner und von der thermisch belasteten Kontaktfläche der Elektrode der Schmelze weit entfernter Bereich der Elektrode gekühlt wird. Die Elektrode schmilzt daher verhältnismäßig schnell ab, ihre Standzeit ist gering. Der Elektrodenaustausch ist aufwendig, da die neuen Elektroden in das Feuerfestmaterial der Ofenwandung eingebettet werden müssen.

Da bei einer solchen am äußeren Elektrodenteil angeordneten Kühleinrichtung wegen der geringen Kühlleistung die Gefahr eines unvorhergesehenen Durchbruchs des Ofenbodens kaum gemindert ist, schlägt EP 0 133 652 vor, die Kühleinrichtung mit einem unterhalb des Ofengefäßboden angeordneten Abschirmdach vor durch den Ofenboden hindurchtretendem flüssigem Metall zu schützen.

Zur Erhöhung der Kühlung ist bereits vorgeschlagen worden (DE-B-40 26 897, DE-A-43 35 065), Hohlräume im Elektrodenkörper vorzusehen und diese durch Versprühen von Wasser zu kühlen. Aus Sicherheitsgründen sind diese Hohlräume sehr weit von dem mit der Metallschmelze in Berührung stehenden Elektrodenteil beabstandet und befinden sich außerhalb der Ofenwandung. Dieser große Abstand soll sicherstellen, daß bei einem Ausfall der Kühlung oder einer ungewöhnlichen thermischen Belastung der Elektrode diese nicht soweit abschmilzt, daß Metallschmelze in diesen Hohlraum durchbrechen kann. Ein Kontakt der Metallschmelze mit Kühlwasser kann zur explosionsartigen Reaktionen führen, insbesondere dann, wenn Wasser von der Metallschmelze eingeschlossen wird, da die dann erfolgende Verdampfung und Expansion des Wasserdampfs die Schmelze explosionsartig auseinanderreißt. Auch die chemische Zersetzung des Wassers und anschließende Knallgasreaktionen sind nicht auszuschließen. Zudem könnte ein Durchbruch von Metallschmelze in die Hohlräume bedeuten, daß der Ofen über die durchgebrannte Elektrode und die Hohlräume ausläuft.

DE-A-2637632 schlägt vor, zwischen einem Hohlraum für Kühlmediums und dem mit der Metallschmelze in Berührung stehenden Elektrodenteil gasgefüllte Kanäle in die Elektrode einzubringen und die Gasdrucke in diesen Kanälen ständig zu messen, so daß ein Abschmelzen der Elektrode über die Druckänderung festgestellt und unterbrochen werden kann, bevor es zu weiteren Schäden kommt. Auch diese Maßnahme erfordert einen großen Abstand zwischen dem Hohlraum der Kühlung und dem mit der Metallschmelze in Berührung stehenden Elektrodenteil.

Der aufgrund dieser Sicherheitserwägungen gewählte große Abstand zwischen gekühlten Hohlräumen und Metallschmelze bedingt eine unbefriedigende Kühlwirkung und demzufolge ebenfalls einen hohen Elektrodenverschleiß.

Es besteht ferner ein Bedürfnis, thermisch besonders belastete Wandbereiche von metallurgischen Gefäßen (bspw. Elektrolichtbogenöfen) zu kühlen, um den Verschleiß der Gefäßwandung zu vermindern. Eine Wasserkühlung ist hier aus den gleichen Gründen wie oben genannt problematisch, insbesondere besteht die genannte Explosionsgefahr. Bricht bei außergewöhnlichen Betriebsbedingungen Metallschmelze durch die Gefäßwandung in ein solches Kühlelement, kann u.U. das Gefäß über diesen durchgebrannten Bereich auslaufen.

Der Erfindung liegt die Aufgabe zugrunde, eine Elektrode bzw. ein Kühlelement der eingangs genannten Art zu schaffen, die bzw. das eine wirkungsvollere Kühleinrichtung aufweist und den Sicherheitsanforderungen genügt.

Die Erfindung löst diese Aufgabe dadurch, daß in dem gekühlten Hohlraum wenigstens eine Fangeinrichtung zum Auffangen von in den Hohlraum durchbrechender Metallschmelze angeordnet ist.

Im Rahmen der Erfindung ist unter dem Begriff "Versprühen" jegliches Verteilen des Kühlmediums in dem Hohlraum dergestalt, daß zumindest ein Teil der Innenwandung des Hohlraums davon gekühlt wird, zu verstehen. Bevorzugt ist feinverteiltes Versprühen mittels einer oder mehrerer Düsen. Als Kühlmedium wird bevorzugt Wasser oder ein Wasser/Luftgemisch verwendet. Die Verwendung anderer Kühlmedien ist ebenfalls möglich. Eine besonders hohe Kühlwirkung läßt sich durch die Verwendung von flüssigem Natrium als Kühlmittel erzielen.

Unter einer Fangeinrichtung für durchbrechende Metallschmelze ist jegliche Einrichtung zu verstehen, die den weiteren Durchtritt von in den Hohlraum durchgebrochener Metallschmelze in Richtung auf die Außenwandung des metallurgischen Gefäßes zu verhindert oder zumindest verzögert. Sofern als Kühlmittel Natrium verwendet wird, muß die Fangeinrichtung so ausgebildet sein, daß sie den Rückfluß des erwärmten Natriums nicht oder nur unwesentlich behindert.

Der Begriff "Wand eines metallurgischen Gefäßes" ist weit zu verstehen und umfaßt jegliche Wandung, bspw. Boden, Seitenwände, Deckel etc.

Bei der erfindungsgemäßen Elektrode bzw. dem Kühlelement kann der Hohlraum ohne Sicherheitsrisiko weit in die feuerfeste Auskleidung der Gefäßwandung hinein und dicht an den zur Schmelze weisenden Endbereich ragen. Sollte es bei außergewöhnlich ungünstigen Betriebsbedingungen einmal zu einem so weitgehenden Abschmelzen der Elektrode kommen, daß Metallschmelze in den Hohlraum durchbricht, wird diese durch die Fangeinrichtung(en) gestoppt, ein Auslaufen des Ofens durch die Elektrode hindurch wird vermieden. Die Erfindung hat erkannt, daß aufgrund der bei der Sprühkühlung verwendeten verhältnismäßig geringen Wassermenge eine Explosionsgefahr durch Kontakt von Metallschmelze mit dem Sprühnebel überraschenderweise nicht besteht. Die Fangeinrichtungen sind so ausgebildet, daß sie den Rücklauf von Kühlmedium nur unwesentlich behindern. Somit kann bei einem Durchbruch von Schmelze in dem entsprechenden Hohlraumbereich ggf. noch vorhandenes Kühlmedium schnell abfließen bzw. abgezogen werden. Auf diese Weise wird verhindert, daß die von den Fangeinrichtungen gestoppte Metallschmelze Restwasser in einer Menge einschließt, die zu einer Explosionsgefahr führt.

Das erfindungsgemäße Kühlelement kann (vorzugsweise an thermisch besonders belasteten Stellen) in eine Gefäßwand eingelassen werden und seine Kühlwirkung in geringem Abstand von der Kontaktfläche Gefäßwand-Schmelze entfalten. Bricht bei einer Betriebsstörung Metallschmelze durch die Gefäßwand in das Kühlelement durch, wird sie durch die erfindungsgemäß vorgesehenen Fangeinrichtungen gestoppt.

Bei der Verwendung von Wasser oder eines Wasser/Luftgemischs als Kühlmedium werden die Betriebsbedingungen vorteilhafterweise so gewählt, daß das Wasser beim Auftreffen auf die zu kühlenden Innenwandung des Hohlraums großenteils oder vollständig verdampft. Dies hat zwei Vorteile. Zum einen nutzt man zur Kühlung so nicht nur die Wärmekapazität des Wassers, sondern auch die wesentlich größere Verdampfungswärme für den Phasenübergang Wasser-Dampf und erhält so selbst bei verhältnismäßig geringen Kühlwasserströmen eine hohe Kühlleistung. Sofern es bei außergewöhnlichen Betriebsbedingunen zu einem Durchbruch von Metallschmelze in den Hohlraum kommt, wird kurz vor diesem Durchbruch die Temperatur im Hohlraum so weit ansteigen, daß praktisch sämtliches Wasser verdampft und die Metallschmelze nach dem Durchbruch nicht einmal mehr mit versprühtem Wasser, sondern nur mit Wasserdampf in Berührung kommt. Dies bedeutet eine nochmalige Verminderung der Explosionsgefahr. Somit führt die Einstellung der Betriebsbedingungen dergestalt, daß bereits im Normalbetrieb das versprühte Wasser oder dessen größter Teil beim Auftreffen auf die Hohlraumwand verdampft, zu einer nochmaligen Erhöhung der Sicherheit.

Das aus dem Hohlraum abfließende erwärmte Wasser und/oder der Wasserdampf wird zweckmäßigerweise von einer Unterdruckquelle wie bspw. einer Vakuumpumpe abgesaugt. Es ist möglich, die Saugleistung der Pumpe höher zu wählen, als für das Abführen des Sprühwassers erforderlich. Durch einen zusätzlichen Einlaß kann dann bei Bedarf Nebenluft eingelassen und damit das Abführen des Kühlmediums begünstigt werden. Man kann so sicherstellen, daß sich an den Fangeinrichtungen kein Wasserstau bildet.

Bei der erfindungsgemäßen Elektrode ist die Fangeinrichtung zweckmäßigerweise als Einrichtung zur Querschnittsverengung des Hohlraums längs der Hauptachse der Elektrode ausgebildet. Die Hauptachse der Elektrode ist ihre durch die Gefäßwandung hindurchweisende Längsachse. Eine Querschnittsverengung des Hohlraums längs dieser Hauptachse bedeutet, daß der Hohlraumquerschnitt in der Ebene senkrecht zu dieser Hauptachse vermindert wird. Eine solche Querschnittsverengung stoppt bzw. bremst den Weiterfluß der im Vergleich zum Kühlmedium höherviskosen Metallschmelze. Die Querschnittsverengung ist zweckmäßigerweise so ausgebildet, daß der freie Querschnitt in eine Mehrzahl von kleinen Querschnittsflächen aufgeteilt ist. Bspw. kann die Fangeinrichtung Schlitz- oder Lochbleche aufweisen. Zweckmäßigerweise sind Durchtrittsöffnungen für abzuführendes Kühlmedium vorhanden, bei einem Lochblech sind dies die darin angeordneten Löcher, bspw. in Form von Schlitzen. Wenn nachfolgende von Lochblechen die Rede ist, so ist darunter jegliches Blech mit zum Durchtritt von Kühlmedium geeigneten Öffnungen wie bspw. Bohrungen, Schlitzen etc. zu verstehen.

Ein Lochblech behindert nicht den Rückstrom des in den Hohlraum eingebrachten Kühlmediums, stoppt aber möglicherweise durchbrechende Metallschmelze zum einen mechanisch durch die Verengung der Querschnittsfläche und zum anderen thermisch durch seine Wärmekapazität. Das Lochblech wird durch die Schmelzmasse erhitzt und kühlt dabei die vordere Schmelzmassenfront so weit ab, daß diese entweder erstarrt oder doch zumindest so viskos wird, daß sie nicht mehr durch die Öffnungen im Lochblech dringen kann. Zur Erhöhung der Sicherheit können mehrere hintereinander angeordnete Fangeinrichtungen vorgesehen sein. Es ist von Vorteil, wenn die Fangeinrichtungen (bspw. die Lochbleche) aus einem Material bestehen, das einen über der Temperatur der Metallschmelze liegenden Schmelzpunkt aufweist. Bei einem metallurgischen Gefäß für eine Stahlschmelze können die Fangeinrichtungen bspw. aus Edelstahlblechen bestehen, die Stärke der Bleche kann bspw. 30 mm betragen.

Bei der Elektrode weist der Hohlraum vorteilhafterweise seine größte Erstreckung parallel zur Hauptachse der Elektrode auf. Er ist bspw. zylindrisch ausgebildet, eine Stirnseite des Zylinders, die kalottenförmig ausgebildet sein kann, ist dem mit der Metallschmelze in Berührung stehenden Elektrodenende zugewandt. Der Hohlraum kann sich weit in die Wandung des Gefäßes und die zugehörige feuerfeste Auskleidung hineinerstrecken, der Abstand von der Stirnseite des Hohlraums zum in den Gefäßinnenraum hineinragenden Elektrodenende braucht nur wenige Zentimeter (bspw. 5 bis 10 cm) zu betragen. Eine wirkungsvolle Kühlung ist so möglich.

Zweckmäßigerweise ist in dem dem Innenraum des metallurgischen Gefäßes zugewandten Endbereich des Hohlraums wenigstens eine Düse zum Versprühen von Kühlmedium angeordnet. Auf diese Weise wird dieser thermisch hochbelastete Hohlraumendbereich besonders wirkungsvoll gekühlt. Die Kühlmittelzufuhr zu der Düse kann bei der Elektrode mittels eines sich im wesentlichen in Richtung ihrer Hauptachse durch den Hohlraum hindurch erstreckenden Rohrs erfolgen. Dieses Rohr kann zusätzlich zu seiner Hauptfunktion, das Kühlmedium zuzuführen, gleichzeitig den Hohlraumquerschnitt verengen und so Teil der Fangeinrichtung bilden.

Zweckmäßigerweise ist es als dickwandiges Metallrohr ausgebildet. Sein Außendurchmesser kann bspw. etwa 30 - 70 % des Innendurchmessers des (zylindrischen) Hohlraums betragen. Die Dickwandigkeit bedeutet, daß das Metallrohr eine hohe Wärmekapazität aufweist und so zur schnellen Abkühlung und Erstarrung etwaig durchbrechender Metallschmelze beiträgt.

Die Fangeinrichtungen oder Teile davon (bspw. die Lochbleche) können das Rohr in dem Hohlraum haltern. Soweit die Fangeinrichtungen Lochbleche aufweisen, sind diese vorteilhafterweise derart geneigt angeordnet, daß darauf ablaufendes noch flüssiges Kühlmedium, das nicht durch die Öffnungen tropft, zur Hohlraumwand abgeleitet wird, um dort die Kühlwirkung zu verstärken.

Die Wandung des Hohlraums besteht zweckmäßigerweise aus einem gut wärmeleitfähigen Material, bspw. aus Kupfer oder einer Kupferlegierung. Bspw. kann der Hohlraum von einem Kupferzylinder mit kalottenförmigem Abschluß umschlossen sein. Der kalottenförmige Abschluß ist dem Gefäßinnenraum zugewandt.

An diesem stirnseitigen Abschluß des Kupferhohlzylinders kann sich ein Metallkörper anschließen, der in den Innenraum des metallurgischen Gefäßes hineinragt. Dabei handelt es sich vorteilhafterweise um eine Stahlgußhaube oder Kupferhaube, die auf den Kupferzylinder aufgesetzt (bspw. aufgeschweißt, aufgesprengt oder aufgepreßt) ist. Kupferhaube und -zylinder können auch einstückig miteinander verbunden sein. Beim Betrieb der Elektrode schmilzt die Metallschmelze die Stahlgußhaube soweit ab, bis sich thermisches Gleichgewicht einstellt. Auf diese Weise bildet sich ein sogenannter Stahlbär als Elektrodenabschluß, der abhängig von der thermischen Belastung und der Temperatur der Schmelze größer oder kleiner werden kann. Eine Kupferhaube weist eine gegenüber einer Stahlgußhaube verbesserte Wärmeleitfähigkeit auf, so daß sich auf ihr ebenfalls ein Stahlbär durch erstarrenden Stahl bildet. Bei einer Kupferhaube ist es aufgrund der höheren Wärmeleitfähigkeit dieses Materials möglich, als weitere Sicherheitsmaßnahme den sprühgekühlten Hohlraum etwas weiter beabstandet von der Schmelze anzuordnen, so daß man einen noch größeren Sicherheitsabstand zwischen Schmelze und wassergekühlter Innenfläche des Hohlraums hat. In dem Hohlraum kann ein Drucksensor angeordnet sein. Im Falle eines Stahldurchbruchs in dem Hohlraum verändert sich der Druck und die Wasserzufuhr kann sofort unterbrochen werden.

Die erfindungsgemäße Elektrode oder das Kühlelement kann einen oder mehrere Temperaturfühler aufweisen. Besonders vorteilhaft ist die Anordnung von je einem Temperaturfühler an der Stirninnenwand des Hohlraums und dazu benachbart außerhalb des Hohlraums im Elektrodenkörper (der Stahlgußhaube). Durch Differenzmessungen lassen sich dann Temperaturbestimmungen des Schmelzgutes durchführen. Bei dem Kühlelement können Temperaturfühler bspw. in oder an der vorzugsweise aus Kupfer oder Stahl bestehenden Wand des Kühlelements angeordnet sein.

Erfindungsgemäß kann zusätzlich ein Blasrohr bzw. eine Lanze zum Einbringen von Feststoffen, Flüssigkeiten und/oder Gasen in den Innenraum des metallurgischen Gefäßes vorgesehen sein. Bspw. kann dadurch Sauerstoff zum Oxidieren von Verunreinigungen der Schmelze oder Kohlenstaub, bspw. Aufkohlen von Stahl, eingebracht werden. Das Blasrohr ist zweckmäßigerweise gekühlt, vorteilhafterweise verläuft es bei der Elektrode konzentrisch innerhalb des Zufuhrrohrs für Kühlmedium, so daß es von diesem Kühlmedium umspült wird.

Die Verwendbarkeit einer erfindungsgemäßen Elektrode ist nicht auf die Stromzufuhr zu einer Metallschmelze beschränkt. Sie kann auch lediglich zu dem Zweck verwendet werden, die Feuerfestauskleidung eines metallurgischen Gefäßes zu kühlen und deren Haltbarkeit zu erhöhen. Zu diesem Zweck ist sie in gleicher Weise wie bei ihrer Verwendung zwecks Stromzufuhr in der Feuerfestauskleidung dieses metallurgischen Gefäßes angeordnet. Konstruktive Änderungen der erfindungsgemäßen Elektrode sind bei ihrer Verwendung lediglich zu Kühlzwecken nicht erforderlich, einzig und allein die Einrichtungen zur Stromzufuhr können weggelassen werden. Der Schutz der Ansprüche soll sich auch auf eine erfindungsgemäß gestaltete Vorrichtung erstrecken, die ausschließlich zu Kühlzwecken verwendet wird.

Gegenstand der Erfindung ist ferner ein Gleichstrom-Lichtbogenofen, der wenigstens eine erfindungsgemäße Elektrode und/oder ein erfindungsgemäßes Kühlelement aufweist.

Zwei Ausführungsbeispiele der Erfindung werden im folgenden anhand der Zeichnungen beschrieben. Darin zeigen:
- Fig. 1: einen Längsschnitt durch eine erfindungsgemäße Elektrode;
- Fig. 2: einen Längsschnitt durch eine zweite erfindungsgemäße Elektrode, die zusätzlich ein Blasrohr zum Einbringen von Stoffen in den Ofeninnenraum aufweist;
- Fig. 3: einen Längsschnitt durch ein erfindunsgemäßes Kühlelement für die Wand eines metallurgischen Gefäßes, das zusätzlich mit einer Unterbaddüse für das Metallbad versehen ist;
- Fig. 4: einen Querschnitt durch dieses Kühlelement.

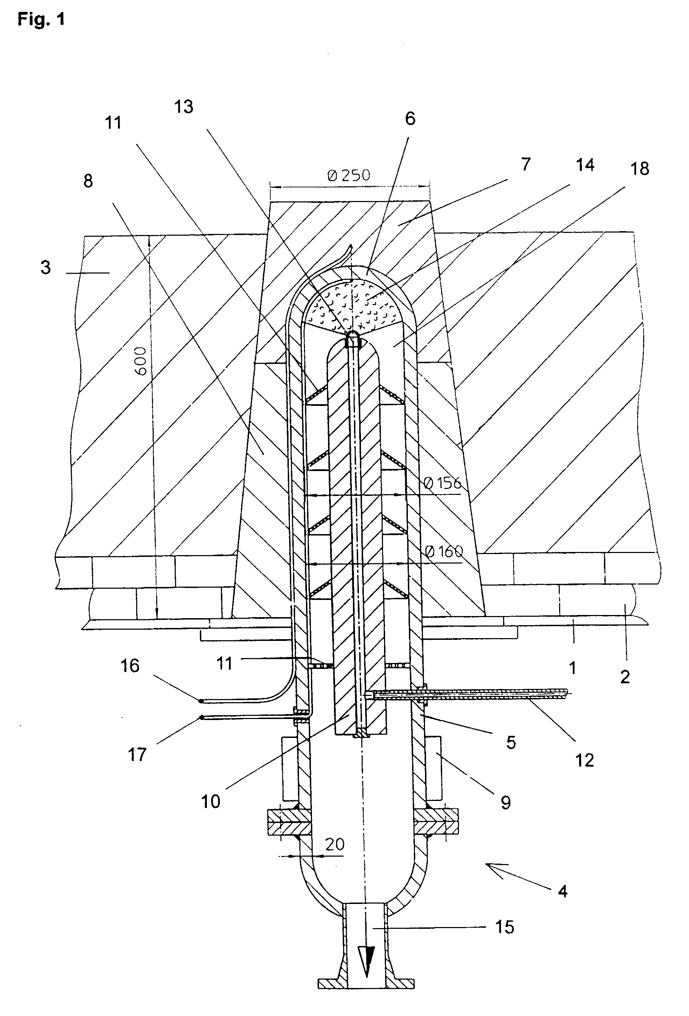

Fig. 1 zeigt eine in den Boden eines Gleichstrom-Lichtbogenofens eingelassene erfindungsgemäße Elektrode. Die Ofenwand ist mehrschichtig aufgebaut. Sie weist eine metallische Außenwand 1, ein Sicherheitsfutter 2 aus Feuerfestmaterial sowie eine weitere Feuerfestauskleidung 3 (FF-Stampfmasse "Ankerhort") auf.

Diese Ofenwand wird von einer insgesamt mit 4 bezeichneten erfindungsgemäßen Elektrode durchdrungen. Die Elektrode weist einen Hohlzylinder 5 aus Kupfer auf, der sich in die Ofenwandung hineinerstreckt und in einem Abstand von etwa 50 mm von der Innenseite der Stampfmasse 3 in einem kalotten- bzw. halbkugelförmigen stirnseitigen Abschluß 6 endet. Im Bereich der Stirnseite 6 ist auf den Kupferzylinder 5 eine Stahlhaube 7 aufgeschweißt, die in den Innenraum des Ofens hineinragt. Unterhalb der Stahlhaube 7 ist der Kupferzylinder 5 von einem kegelförmigen (ggf. auch zylindrischen) Mantel 8 aus Feuerfestmaterial umgeben. Die Stromzufuhr zu der Elektrode erfolgt über eine den Kupferzylinder 5 umschließende Kontaktklemme 9.

Konzentrisch innerhalb des Kupferzylinders 5 ist ein dickwandiges Stahlrohr 10 angeordnet, das über fünf untereinander angeordnete ringförmige Lochbleche 11 mit der Innenwand des Kupferzylinders 5 verbunden und mittels dieser Lochbleche 11 gehaltert wird. Dieses Rohr 10 wird mittels einer Zufuhrleitung 12 mit Kühlmedium (vorzugsweise Wasser oder Luft/Wassergemisch) gespeist. An dem der Stirnseite 6 zugewandten Ende weist das Rohr 10 eine Düse 13 auf, mittels der, wie bei 14 angedeutet, das Kühlmedium kegelförmig gegen die Innenfläche des stirnseitigen Endes 6 gesprüht wird. An dem der Stirnseite 6 gegenüberliegenden Ende weist der Kupferzylinder 5 einen Abfluß 15 zum Abführen des erwärmten Kühlmediums auf. Dieser Abfluß 15 kann mit einer Unterdruckquelle (Vakuumpumpe oder Saugwirkung einer Falleitung) verbunden sein, um das Abziehen des Kühlmediums zu unterstützen. Die Verbindung des Abflusses 15 mit einer Unterdruckquelle ist insbesondere dann sinnvoll, wenn das Kühlmedium oder ein Teil davon beim Auftreffen auf die Innenfläche des stirnseitigen Endes 6 verdampft und anschließend nicht in flüssiger Form, sondern gasförmig durch den Auslaß 15 abgeführt werden muß. Temperaturfühler (Thermoelemente) 16, 17 messen die Temperatur im Bereich der Stahlgußhaube 7 einerseits und an der Innenwandung der Stirnseite 6 des Kupferzylinders 5 andererseits.

Während des Betriebs des Ofens und der Elektrode wird Kühlmedium über die Leitung 12 dem Rohr 10 zugeführt und mittels der Düse 13 im Innenraum des Kupferzylinders 5 versprüht. Das erwärmte Kühlmedium läuft im wesentlichen entlang der Innenwand des Kupferzylinders 5 durch die Lochbleche 11 hindurch nach unten ab und wird durch den Auslaß 15 abgeführt. Die im Ofen befindliche Metallschmelze (in der Regel eine Stahlschmelze) schmilzt die Stahlhaube soweit ab, bis sich ein thermisches Gleichgewicht einstellt. Es entsteht ein Stahlbär, der die Stampfmasse 3 überkragen kann. Aufgrund der hohen Kühlwirkung durch das Versprühen von Kühlmedium und des geringen Abstands der Stirnseite 6 von der Schmelzmasse kommt es unter normalen Betriebsbedingungen zu keinem vollständigen Abschmelzen der Stahlhaube bzw. des Stahlbärs 7.

Die mit dem Auslaß 15 verbundene Vakuumpumpe kann bei Bedarf eine höhere Förderleistung aufweisen, als zur Abführung der eingesprühten Wassermenge erforderlich ist. Das Wasserzufuhrrohr 10 ist dann zweckmäßigerweise konzentrisch von einem weiteren (in der Zeichnung nicht dargestellten) Rohr umhüllt, durch den zwischen diesen beiden Rohren gebildeten Spalt und eine in der Zeichnung ebenfalls nicht dargestellte Zufuhrleitung kann zwecks Druckausgleich Außenluft in den vom Zylinder 5 umschlossenen Hohlraum gelangen.

Allenfalls bei einer Verminderung oder einem vollständigen Ausfall der Kühlmittelzufuhr kann die Stahlhaube 7 soweit abschmelzen, daß Metallschmelze unmittelbar mit der Stirnseite 6 des Kupferzylinders 5 in Berührung kommt. Sofern dann der Kupferzylinder 5 aufschmilzt und Metallschmelze in seinen Innenraum (den Hohlraum 18) eindringt, trifft die Metallschmelze auf das dickwandige Rohr 10 und das an oberster Stelle angeordnete Lochblech 11. Rohr 10 und Lochblech 11 behindern durch die Querschnittsverminderung des Innenraums des Kupferzylinders 5 den Weiterfluß der Metallschmelze zum einen mechanisch, zum anderen kühlen sie durch ihre hohe Wärmekapazität die Schmelzmasse soweit ab, daß die vordere Schmelzmassenfront entweder ganz erstarrt oder doch so viskos wird, daß sie durch das oberste Lochblech 11 hindurch nicht weiterfließen kann. Sollte ausnahmsweise doch ein Durchbruch durch das erste Lochblech 11 erfolgen, stehen darunter vier weitere Lochbleche zum Auffangen der Schmelzmasse bereit. Damit ist sichergestellt, daß unter keinen Umständen die Metallschmelze den Kupferzylinder 5 bis in den Bereich außerhalb der Ofenwandung 1, 2, 3 durchdringt, den vergleichsweise niedrigschmelzenden Kupferzylinder im Bereich des Abflusses 15 aufschmilzt und der Ofen anschließend mehr oder weniger vollständig ausläuft. Die Lochbleche 11 bestehen bspw. aus Stahl.

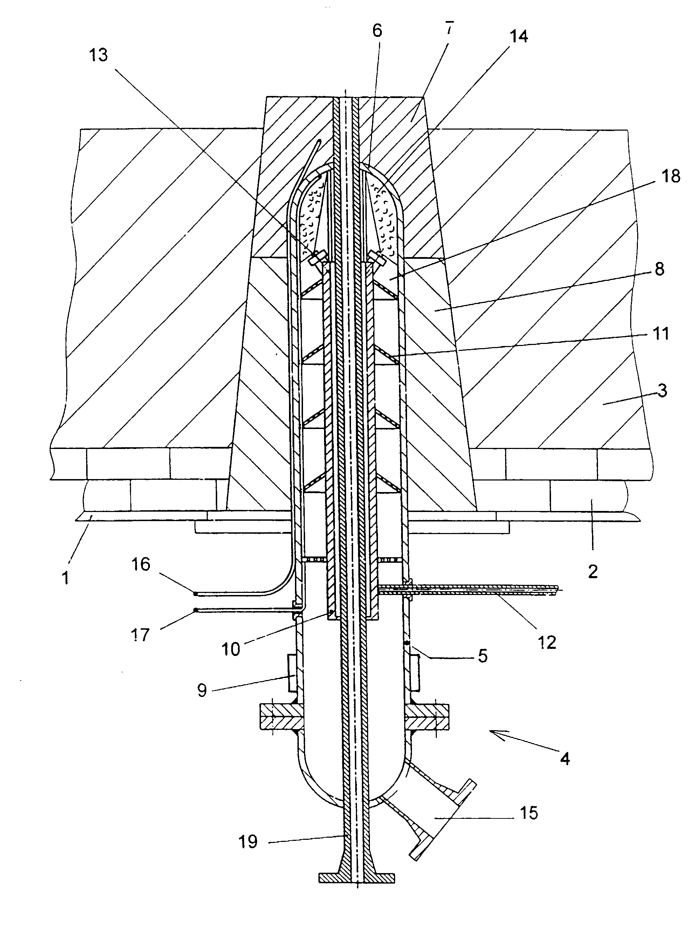

Fig. 2 zeigt eine Ausführungsform der Erfindung, bei der zusätzlich ein Blasrohr 19 zum Einbringen von Feststoffen, Gasen und/oder Flüssigkeiten in die Metallschmelze vorhanden ist. Das Blasrohr 19 verläuft konzentrisch innerhalb des Kupferzylinders 5 und des Rohrs 10, in seinem in Rohr 10 verlaufenden Bereich wird es von Kühlmittel umströmt und so gekühlt. Zum Kühlen des stirnseitigen Bereichs 6 des Kupferrohrs 5 sind bei dieser Ausführungsform zwei oder mehrere über den Umfang des Rohrs 10 verteilte Düsen 13 angeordnet.

Bei den gezeigten Ausführungsformen bilden die Lochbleche 11 und das Rohr 10 gemeinsam die erfindungsgemäße Fangeinrichtung.

Bei einem Gleichstrom-Lichtbogenofen werden in der Regel mehrere (bspw. sechs) der erfindungsgemäßen Elektroden als Anoden im Bereich der Mitte des Ofenbodens unterhalb der Kathode auf dem Umfang eines Kreises von bspw. etwa einem Meter in gleichen Winkelabständen angeordnet.

Sofern eine erfindungsgemäße Elektrode nicht zur Stromzufuhr, sondern ausschließlich als Kühlelement für die Feuerfestauskleidung eines Ofens Verwendung finden soll, wird lediglich die Kontaktklemme 9 weggelassen und die Elektrode nicht mit einer Stromquelle verbunden. Man nutzt dann ausschließlich die Kühlfunktion dieser Elektrode, um die Haltbarkeit einer Feuerfestauskleidung, insbesondere an thermisch hoch belasteten Stellen zu erhöhen.

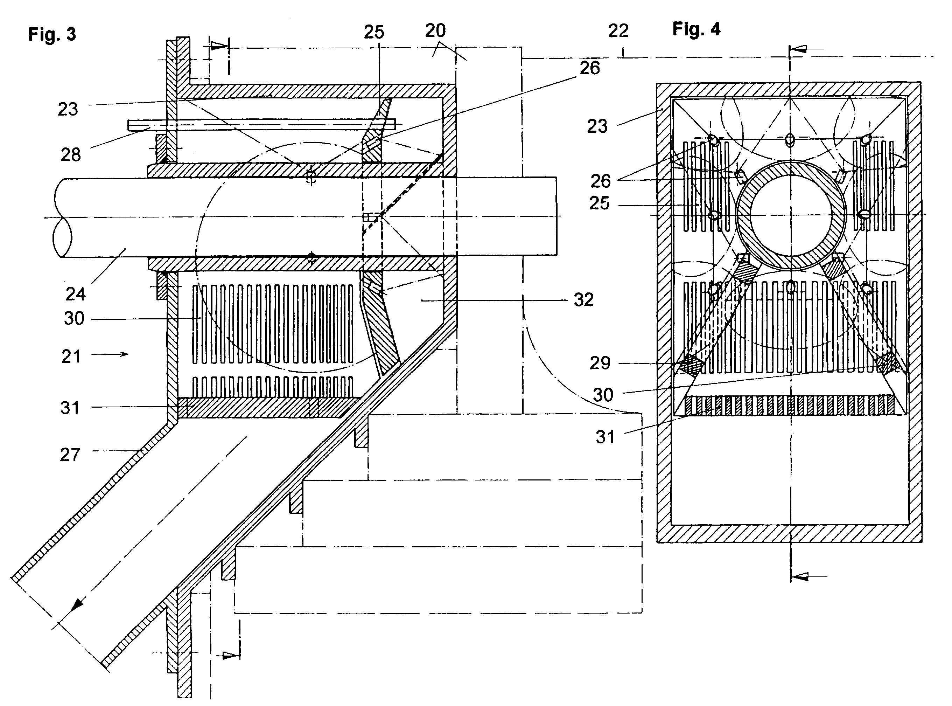

Die Fig. 3 und 4 zeigen eine andere Ausführungsform eines erfindungsgemäßen Kühlelementes für die Wand eines metallurgischen Gefäßes. In die Wand 20 eines metallurgischen Gefäßes (bspw. eines Elektrolichtbogenofens) sind insgesamt mit 21 bezeichnete Kühlelemente eingebaut. Es können mehrere dieser Kühlelemente 21 verteilt über den Ofenumfang angeordnet sein, vorzugsweise in einem Bereich unterhalb des Flüssigkeitsspiegels 22 des Stahlbads. Das Gehäuse 23 der Kühlelemente 21 besteht vorzugsweise aus Kupfer oder Stahl und wird durch den Mantel des Ofenunterteils in die feuerfeste Herdzustellung eingelassen. Es umschließt den Hohlraum 32. Vorteilhafterweise sind die Kühlelemente von außen zugänglich, so daß die Wartung und ggf. der Austausch ohne großen Aufwand möglich sind. Die gezeigte Ausführungsform des Kühlelements weist eine nachschiebbare Unterbadlanze zum Einbringen insbesondere fester und/oder gasförmiger Stoffe in die Metallschmelze auf. Wenn über den Ofenumfang verteilt mehrere dieser erfindungsgemäßen Kühlelemente eingebaut sind, werden in der Regel nur einige eine solche Unterbadlanze aufweisen.

In einem als Fangeinrichtung ausgebildeten Edelstahlblech 25 (unten noch näher erläutert) sind 8 Sprühdüsen 26 angeordnet, deren Sprühkegel sich teilweise überlappen, so daß der der Metallschmelze zugewandte Bereich des Kühlelementgehäuses oder Mantels 23 im wesentlichen vollflächig mit Kühlmedium (vorzugsweise Wasser) beaufschlagt wird. Zwischen dieser mit Kühlmittel beaufschlagten Vorderseite des Kühlelements 21 und der Metallschmelze besteht die Wand des metallurgischen Gefäßes aus einer Feuerfestplatte 20 mit einer Stärke von 100 mm. Diese Feuerfestplatte 20 weist eine Bohrung zum Durchführen der Unterbadlanze 24 auf.

Das durch die Düsen 26 eingesprühte Kühlmedium wird durch ein mit einer Vakuumpumpe verbundenes Abflußrohr 27 abgeleitet. Die Saugleistung der mit dem Abflußrohr 27 verbundenen Vakuumpumpe ist größer als zur Absaugung des zurückgelaufenen Kühlwassers erforderlich. Dies soll einen Wasserrückstau an den noch zu erläuternden Fangeinrichtungen verhindern. Um zu vermeiden, daß es aufgrund dieser erhöhten Saugleistung zu einem deutlichen Unterdruck im Inneren des Kühlelements 21 kommt, ist ein zusätzliches Rohr 28 vorgesehen, durch das Außenluft nachgesaugt werden kann. Das Rohr 28 kann mit einem Drucksensor zur Überwachung des Innendrucks des Kühlelements 21 versehen sein. Die Menge der durch das Rohr 28 nachströmenden Luft kann bei Bedarf durch eine in der Zeichnung nicht dargestellte Drossel reguliert werden.

Zwecks Erzielung einer hohen Kühlleistung ist das erfindungsgemäße Kühlelement verhältnismäßig dicht an der Metallschmelze angeordnet, d.h. es wird nur durch eine verhältnismäßig dünne Feuerfestwand 20 von der Metallschmelze getrennt. Vermindert sich im Betrieb des Ofens durch Verschleiß die Stärke der Feuerfestplatte 20 weiter, kann sich vor dem Kühlelement eine erstarrte Stahlschicht in der Art eines oben beschriebenen Stahlbärs bilden. Kommt es bei außergewöhnlichen Betriebsbedingungen dennoch zu einem Durchbruch von Metallschmelze in das Kühlelement 21, verhindern die nachfolgend geschilderten Fangeinrichtungen ein Auslaufen des Ofens.

Eine erste Fangeinrichtung 25 in Form eines Edelstahlschlitzbleches ist im wesentlichen parallel zu der der Metallschmelze zugewandten Vorderseite des Kühlelements angeordnet. Es bildet eine erste Barriere gegen auslaufende Schmelze. Die Stärke des Edelstahlschmelzblechs 25 beträgt 30 mm. Als zweite Fangeinrichtung sind im wesentlichen senkrecht zum Schlitzblech 25 verlaufende Schlitzbleche 29, 30 vorgesehen, deren Anordnung insbesondere in Fig. 4 zu erkennen ist. Als dritte Barriere ist vor dem Abflußrohr 27 ein weiteres Edelstahlschlitzblech 31 angeordnet.

Die Edelstahlschlitzbleche als Fangeinrichtungen erlauben zwar einen Durchtritt des ablaufenden Kühlwassers, bilden jedoch eine Barriere gegen die in das Kühlelement eindringende Metallschmelze. Die Vorderfront der Schmelze kühlt beim Auftreffen auf die Edelstahlbleche sofort ab und erstarrt. Der hohe Schmelzpunkt des für die Fangeinrichtungen verwendeten Edelstahls bietet einen zusätzlichen Schutz gegen den Durchbruch von Metallschmelze.

Mittels des mit dem Rohr 28 verbundenen Drucksensors kann der Druck im Innenraum 32 des Kühlelements überwacht werden. Beim Durchbruch von Stahl wird sich der Innendruck schlagartig verändern. Der Drucksensor kann dann die Wasserzufuhr zu den Sprühdüsen 26 sofort unterbinden und so verhindern, daß Sprühwasser in das metallurgische Gefäß gelangt.

## Patentansprüche

1. Elektrode für ein metallurgisches Gefäß, mit wenigstens einem Hohlraum (18) und wenigstens einer Einrichtung (10, 12, 13) zum Kühlen durch Versprühen eines Kühlmediums in diesem Hohlraum (18), dadurch gekennzeichnet, daß in dem Hohlraum (18) wenigstens eine Fangeinrichtung (11) zum Auffangen von in den Hohlraum (18) durchbrechender Metallschmelze angeordnet ist.

2. Elektrode nach Anspruch 1, dadurch gekennzeichnet, daß die Fangeinrichtung (11) als Einrichtung zur Querschnittsverengung des Hohlraums (18) längs der Hauptachse der Elektrode ausgebildet ist.

3. Elektrode nach Anspruch 2, dadurch gekennzeichnet, daß die Fangeinrichtung (11) Durchtrittsöffnungen für abzuführendes Kühlmedium aufweist.

4. Elektrode nach Anspruch 3, dadurch gekennzeichnet, daß die Fangeinrichtung wenigstens ein Lochblech (11) aufweist.

5. Elektrode nach einem der Ansprüche 1 bis 4, dadurch gekennzeichnet, daß der Hohlraum (18) seine größte Erstreckung parallel zur Hauptachse der Elektrode aufweist.

6. Elektrode nach Anspruch 5, dadurch gekennzeichnet, daß in dem dem Innenraum zugewandten Endbereich des Hohlraums (18) wenigstens eine Düse (13) zum Versprühen des Kühlmediums angeordnet ist.

7. Elektrode nach Anspruch 6, dadurch gekennzeichnet, daß die Kühlmittelzufuhr zu der Düse (13) mittels eines sich im wesentlichen in Richtung der Hauptachse der Elektrode durch den Hohlraum (18) erstreckenden Rohrs (10) erfolgt.

8. Elektrode nach Anspruch 7, dadurch gekennzeichnet, daß dieses Rohr als dickwandiges Metallrohr (10) ausgebildet ist.

9. Elektrode nach einem der Ansprüche 7 oder 8, dadurch gekennzeichnet, daß Fangeinrichtungen (11) das Rohr in dem Hohlraum haltern.

10. Elektrode nach einem der Ansprüche 1 bis 9, dadurch gekennzeichnet, daß die Wandung des Hohlraums (18) aus einem gut wärmeleitfähigen Material besteht.

11. Elektrode nach Anspruch 10, dadurch gekennzeichnet, daß dieses Material Kupfer oder eine Kupferlegierung ist.

12. Elektrode nach einem der Ansprüche 1 bis 11, dadurch gekennzeichnet, daß sie einen an dem dem Innenraum der Elektrode zugewandten Endbereich (6) des Hohlraums (18) angeordneten Metallkörper (7) aufweist, der in den Innenraum des metallurgischen Gefäßes hineinragt.

13. Elektrode nach Anspruch 12, dadurch gekennzeichnet, daß dieser Metallkörper eine Stahlgußhaube (7) ist.

14. Elektrode nach einem der Ansprüche 1 bis 13, dadurch gekennzeichnet, daß sie wenigstens einen Temperaturfühler (16, 17) aufweist.

15. Elektrode nach einem der Ansprüche 1 bis 14, dadurch gekennzeichnet, daß sie zusätzlich ein Blasrohr (19) (Lanze) zum Einbringen von Feststoffen und/oder Flüssigkeiten und/oder Gasen in den Innenraum des metallurgischen Gefäßes aufweist.

16. Elektrode nach Anspruch 15, dadurch gekennzeichnet, daß das Blasrohr (19) eine Kühleinrichtung aufweist.

17. Elektrode nach einem der Ansprüche 1 bis 16, dadurch gekennzeichnet, daß als Kühlmedium Wasser oder ein Wasser/Gasgemisch verwendet wird.

18. Elektrode nach einem der Ansprüche 1 bis 16, dadurch gekennzeichnet, daß als Kühlmedium Natrium verwendet wird.

19. Gleichstrom-Lichtbogenofen, dadurch gekennzeichnet, daß er wenigstens eine Bodenelektrode nach einem der Ansprüche 1 bis 18 aufweist.

20. Kühlelement für eine Wand eines metallurgischen Gefäßes, mit wenigsten einem Hohlraum (32) und wenigstens einer Einrichtung (26) zum Kühlen durch Versprühen eines Kühlmediums in diesem Hohlraum (32), dadurch gekennzeichnet, daß in dem Hohlraum (32) wenigstens eine Fangeinrichtung (25, 30, 31) zum Auffangen von in den Hohlraum (32) durchbrechender Metallschmelze angeordnet ist.

21. Kühlelement nach Anspruch 20, dadurch gekennzeichnet, daß die Fangeinrichtung (25, 30, 31) Durchtrittsöffnungen für abzuführendes Kühlmedium aufweist.

22. Kühlelement nach Anspruch 21, dadurch gekennzeichnet, daß die Fangeinrichtung wenigstens ein Lochblech oder Schlitzblech (25, 30, 31) aufweist.

23. Kühlelement nach einem der Ansprüche 20 bis 22, dadurch gekennzeichnet, daß in dem dem Innenraum des metallurgischen Gefäßes zugewandten Bereich des Hohlraums (32) wenigstens eine Düse (26) zum Versprühen des Kühlmediums angeordnet ist.

24. Kühlelement nach einem der Ansprüche 20 bis 23, dadurch gekennzeichnet, daß die Wandung des Hohlraums (32) aus einem gut wärmeleitfähigen Material besteht.

25. Kühlelement nach Anspruch 24, dadurch gekennzeichnet, daß dieses Material Kupfer oder eine Kupferlegierung ist.

26. Kühlelement nach einem der Ansprüche 20 bis 25, dadurch gekennzeichnet, daß es einen an dem dem Innenraum des metallurgischen Gefäßes zugewandten Endbereich des Hohlraums angeordneten Metallkörper aufweist, der in den Innenraum des metallurgischen Gefäßes hineinragt.

27. Kühlelement nach Anspruch 26, dadurch gekennzeichnet, daß dieser Metallkörper eine Kupfer- oder Stahlgußhaube ist.

28. Kühlelement nach einem der Ansprüche 20 bis 26, dadurch gekennzeichnet, daß es wenigstens einen Temperaturfühler aufweist.

29. Kühlelement nach einem der Ansprüche 20 bis 28, dadurch gekennzeichnet, daß es zusätzlich ein Blasrohr (24) (Lanze) zum Einbringen von Feststoffen und/oder Flüssigkeiten und/oder Gasen in den Innenraum des metallurgischen Gefäßes aufweist.

30. Kühlelement nach einem der Ansprüche 20 bis 29, dadurch gekennzeichnet, daß als Kühlmedium Wasser oder ein Wasser/Gasgemisch verwendet wird.

31. Kühlelement nach einem der Ansprüche 20 bis 29, dadurch gekennzeichnet, daß als Kühlmedium Natrium verwendet wird.

## Claims

1. Electrode for a metallurgical vessel, having at least one cavity (18) and at least one device (10, 12, 13) for cooling by spraying a cooling medium in this cavity (18), characterized in that at least one collecting device (11) for collecting molten metal which breaks through into the cavity (18) is arranged in the cavity (18).

2. Electrode according to Claim 1, characterized in that the collecting device (11) is designed as a device for narrowing the cross-section of the cavity (18) along the main axis of the electrode.

3. Electrode according to Claim 2, characterized in that the collecting device (11) has passage openings for cooling medium which is to be removed.

4. Electrode according to Claim 3, characterized in that the collecting device has at least one perforated plate (11).

5. Electrode according to one of Claims 1 to 4, characterized in that the cavity (18) has its largest dimension extending parallel to the main axis of the electrode.

6. Electrode according to Claim 5, characterized in that at least one nozzle (13) for spraying the cooling medium is arranged in that end region of the cavity (18) which faces towards the interior.

7. Electrode according to Claim 6, characterized in that the coolant is fed to the nozzle (13) by means of a tube (10) which extends through the cavity (18) essentially in the direction of the main axis of the electrode.

8. Electrode according to Claim 7, characterized in that this tube is designed as a thick-walled metal pipe (10).

9. Electrode according to one of Claims 7 and 8, characterized in that collecting devices (11) hold the tube in the cavity.

10. Electrode according to one of Claims 1 to 9, characterized in that the wall of the cavity (18) consists of a material with good thermal conductivity.

11. Electrode according to Claim 10, characterized in that this material is copper or a copper alloy.

12. Electrode according to one of Claims 1 to 11, characterized in that it has a metal body (7) which is arranged at that end region (6) of the cavity (18) which faces towards the interior of the electrode, and which metal body projects into the interior of the metallurgical vessel.

13. Electrode according to Claim 12, characterized in that this metal body is a cast steel hood (7).

14. Electrode according to one of Claims 1 to 13, characterized in that it has at least one temperature sensor (16, 17).

15. Electrode according to one of Claims 1 to 14, characterized in that it additionally has a blowpipe (19) (lance) for introducing solids and/or liquids and/or gases into the interior of the metallurgical vessel.

16. Electrode according to Claim 15, characterized in that the blowpipe (19) has a cooling device.

17. Electrode according to one of Claims 1 to 16, characterized in that water or a water/gas mixture is used as the cooling medium.

18. Electrode according to one of Claims 1 to 16, characterized in that sodium is used as the cooling medium.

19. DC arc furnace, characterized in that it has at least one bottom electrode according to one of Claims 1 to 18.

20. Cooling element for a wall of a metallurgical vessel, having at least one cavity (32) and at least one device (26) for cooling by spraying a cooling medium in this cavity (32), characterized in that at least one collecting device (25, 30, 31) for collecting molten metal which breaks through into the cavity (32) is arranged in the cavity (32).

21. Cooling element according to Claim 20, characterized in that the collecting device (25, 30, 31) has passage openings for cooling medium which is to be removed.

22. Cooling element according to Claim 21, characterized in that the collecting device has at least one perforated plate or slotted plate (25, 30, 31).

23. Cooling element according to one of Claims 20 to 22, characterized in that at least one nozzle (26) for spraying the cooling medium is arranged in that region of the cavity (32) which faces towards the interior of the metallurgical vessel.

24. Cooling element according to one of Claims 20 to 23, characterized in that the wall of the cavity (32) consists of a material with good thermal conductivity.

25. Cooling element according to Claim 24, characterized in that this material is copper or a copper alloy.

26. Cooling element according to one of Claims 20 to 25, characterized in that it has a metal body which is arranged at that end region of the cavity which faces towards the interior of the metallurgical vessel, and which metal body projects into the interior of the metallurgical vessel.

27. Cooling element according to Claim 26, characterized in that this metal body is a cast steel or copper hood.

28. Cooling element according to one of Claims 20 to 26, characterized in that it has at least one temperature sensor.

29. Cooling element according to one of Claims 20 to 28, characterized in that it additionally has a blowpipe (24) (lance) for introducing solids and/or liquids and/or gases into the interior of the metallurgical vessel.

30. Cooling element according to one of Claims 20 to 29, characterized in that water or a water/gas mixture is used as the cooling medium.

31. Cooling element according to one of Claims 20 to 29, characterized in that sodium is used as the cooling medium.

## Revendications

1. Electrode pour un récipient métallurgique, comprenant au moins une cavité (18) et au moins un dispositif (10, 12, 13) pour la refroidir par pulvérisation d'un fluide de refroidissement dans cette cavité (18), caractérisée en ce que, dans la cavité (18), est agencé au moins un dispositif d'arrêt (11) destiné à arrêter le bain de métal fondu qui s'infiltre dans la cavité (18).

2. Electrode selon la revendication 1, caractérisée en ce que le dispositif d'arrêt (11) est constitué par un dispositif pour rétrécir la section de la cavité (18) le long de l'axe principal de l'électrode.

3. Electrode selon la revendication 2, caractérisée en ce que le dispositif d'arrêt (11) présente des ouvertures de passage pour le fluide de refroidissement à évacuer.

4. Electrode selon la revendication 3, caractérisée en ce que le dispositif d'arrêt présente au moins une tôle perforée (11).

5. Electrode selon une des revendications 1 à 4, caractérisée en ce que la cavité (18) présente son extension maximale parallèlement à l'axe principal de l'électrode.

6. Electrode selon la revendication 5, caractérisée en ce que, dans la région terminale de la cavité (18) qui est dirigée vers le volume intérieur, est disposée au moins une buse (13) pour la pulvérisation du fluide de refroidissement.

7. Electrode selon la revendication 6, caractérisée en ce que l'amenée du fluide de refroidissement à la buse (13) s'effectue au moyen d'un tube (10) qui s'étend à travers la cavité (18) sensiblement selon l'axe principal de l'électrode.

8. Electrode selon la revendication 7, caractérisée en ce que ce tube est constitué par un tube métallique (10) à paroi épaisse.

9. Electrode selon une des revendications 7 ou 8, caractérisée en ce que des dispositifs d'arrêt (11) maintiennent le tube dans la cavité.

10. Electrode selon une des revendications 1 à 9, caractérisée en ce que la paroi de la cavité (18) est composée d'une matière bonne conductrice de la chaleur.

11. Electrode selon la revendication 10, caractérisée en ce que cette matière est le cuivre ou un alliage de cuivre.

12. Electrode selon une des revendications 1 à 11, caractérisée en ce qu'elle présente un corps métallique (7) disposé sur la région terminale (6) de la cavité (18) dirigée vers le volume intérieur de l'électrode, et qui est engagé dans le volume intérieur du récipient métallurgique.

13. Electrode selon la revendication 12, caractérisée en ce que ce corps métallique est une calotte (7) en acier moulé.

14. Electrode selon une des revendications 1 à 13, caractérisée en ce qu'elle présente au moins une sonde de température (16, 17).

15. Electrode selon une des revendications 1 à 14, caractérisée en ce qu'elle présente en supplément un tube de soufflage (19) (une lance) pour introduire des matières solides et/ou des liquides et/ou des gaz dans le volume intérieur du récipient métallurgique.

16. Electrode selon la revendication 15, caractérisée en ce que le tube de soufflage (19) présente un dispositif de refroidissement.

17. Electrode selon une des revendications 1 à 16, caractérisée en ce qu'on utilise de l'eau ou un mélange eau/gaz comme fluide de refroidissement.

18. Electrode selon une des revendications 1 à 16, caractérisée en ce qu'on utilise du sodium comme fluide de refroidissement.

19. Four à arc à courant continu, caractérisé en ce qu'il présente au moins une électrode de fond selon une des revendications 1 à 18.

20. Elément de refroidissement pour une paroi d'un récipient métallurgique, comprenant au moins une cavité (32) et au moins un dispositif (26) pour la refroidir par pulvérisation d'un fluide de refroidissement dans cette cavité (32), caractérisé en ce que, dans la cavité (32) est agencé au moins un dispositif d'arrêt (25, 30, 31) destiné à arrêter le bain de métal fondu qui s'infiltre dans la cavité (32).

21. Elément de refroidissement selon la revendication 20, caractérisé en ce que le dispositif d'arrêt (25, 30, 31) présente des ouvertures de passage pour le fluide de refroidissement à évacuer.

22. Elément de refroidissement selon la revendication 21, caractérisé en ce que le dispositif d'arrêt présente au moins une tôle perforée ou une tôle à fentes (25, 30, 31).

23. Elément de refroidissement selon une des revendications 20 à 22, caractérisé en ce que, dans la région de la cavité (32) dirigée vers le volume intérieur du récipient métallurgique, est disposée au moins une buse (26) pour la pulvérisation du fluide de refroidissement.

24. Elément de refroidissement selon une des revendications 20 à 23, caractérisée en ce que la paroi de la cavité (32) est composée d'une matière bonne conductrice de la chaleur.

25. Elément de refroidissement selon la revendication 24, caractérisée en ce que cette matière est le cuivre ou un alliage de cuivre.

26. Elément de refroidissement selon une des revendications 20 à 25, caractérisé en ce qu'il présente un corps métallique disposé sur la région terminale de la cavité dirigée vers le volume intérieur du récipient métallique, et qui est engagé dans le volume intérieur du récipient métallurgique.

27. Elément de refroidissement selon la revendication 26, caractérisé en ce que ce corps métallique est une calotte en cuivre ou en acier moulé.

28. Elément de refroidissement selon une des revendications 20 à 26, caractérisé en ce qu'il présente au moins une sonde de température.

29. Elément de refroidissement selon une des revendications 20 à 28, caractérisé en ce qu'il présente en supplément un tube de soufflage (24) (une lance) pour introduire des matières solides et/ou des liquides et/ou des gaz dans le volume intérieur du récipient métallurgique.

30. Elément de refroidissement selon une des revendications 20 à 29, caractérisé en ce qu'on utilise de l'eau ou un mélange eau/gaz comme fluide de refroidissement.

31. Elément de refroidissement selon une des revendications 20 à 29, caractérisé en ce qu'on utilise du sodium comme fluide de refroidissement.
